Europäisches Patentamt

European Patent Office

Office européen des brevets

(19)

(11) Publication number: **0 460 221 A1**

(12)

# EUROPEAN PATENT APPLICATION
## published in accordance with Art. 158(3) EPC

(21) Application number: 91900333.5

(22) Date of filing: **18.12.90**

(86) International application number:
**PCT/JP90/01649**

(87) International publication number:
**WO 91/08854 (27.06.91 91/14)**

(51) Int. Cl.⁵: **B23H 7/10**

(30) Priority: **19.12.89 JP 327395/89**

(43) Date of publication of application:
**11.12.91 Bulletin 91/50**

(84) Designated Contracting States:
**CH DE FR GB IT LI**

(71) Applicant: **FANUC LTD.**
**3580, Shibokusa Aza-Komanba, Oshino-mura**
**Minamitsuru-gun, Yamanashi 401-05(JP)**

(72) Inventor: **ASO, Toshiyuki Room 7-208 Fanuc**
**Manshionharimomi**
**3539-1, Shibokusa Oshino-mura,**
**Minamitsuru-gun**
**Yamanashi 401-05(JP)**
Inventor: **KINOSHITA, Hiroshi**
**3-27-1, Sasahara-machi Omuta-shi**
**Fukuoka 836(JP)**
Inventor: **HIRAI, Toshio Fanuc Dai-3**
**Virakaramatsu**
**3527-1, Shibokusa Oshino-mura**
**Minamitsuru-gun Yamanashi 401-05(JP)**

(74) Representative: **Billington, Lawrence Emlyn et**
**al**
**Haseltine Lake & Co Hazlitt House 28,**
**Southampton Buildings Chancery Lane**
**London WC2A 1AT(GB)**

(54) **WIRE PIECE RECOVERY APPARATUS.**

(57) A wire piece recovery apparatus in a wire cut electric discharge machine, wherein waste wire pieces formed when a wire is cut off prior to an automatic wire connection are recovered without fail so as not to disturb the wire connection and the electric discharge machining. After the wire is cut off with a cutter (110) provided on an arm assembly of a wire connecting unit (80), the arm assembly is returned to a retracted position in a state where waste wire pieces formed by the cut-off are held between a spring member provided on a movable nozzle extension and a stationary nozzle extension. A suction nozzle (101) fixed to the main body (81) of the wire connecting unit is supplied with pressurized air to produce negative pressure in the suction nozzle and the vicinity of the bottom thereof. When the wire pieces are released, the wire pieces sucked into the nozzle are received in a receiver (102) installed on the main body of the wire connecting unit.

## FIG.1

## Technical Field

The present invention relates to a wire-cut electric discharge machine, and more particularly, to an apparatus for recovering a wire piece produced when a wire electrode (hereinafter referred to as wire) is cut prior to automatic wire extension.

## Background Art

In general, a wire-cut electric discharge machine comprises upper and lower wire guides respectively disposed above and below a work table, and is arranged to carry out electric discharge machining by causing a wire, previously passed through wire-passages formed individually in the wire guides and through a machining start hole formed in a workpiece, to travel from the upper wire guide toward the lower wire guide, and by causing electric discharge to generate between the workpiece and the wire. During this time, the electric discharge machine operates to jet machining fluid from upper and lower nozzles, respectively attached to the upper and lower wire guides, toward the electric discharge machining region.

In an electric discharge machine of this kind, wire breakage sometimes may be caused during the electric discharge machining. Moreover, in the case of manufacturing a plurality of products from one workpiece, the wire is artificially cut every time machining for one product is finished. In order to extend the wire thus cut or broken between the two wire guides, the electric discharge machine is provided with an automatic wire extension unit for causing the wire, delivered via the upper guide, to be inserted into the machining start hole of the workpiece and the wire passage of the lower wire guide, while restricting the wire by means of the machining fluid jetted through a wire extension nozzle attached to the upper nozzle.

Generally, prior to automatic wire extension required as a result of wire breakage, the used portion of the broken wire is discarded into a wire recovery box by means of a wire delivery unit. On the other hand, in order to make the automatic wire extension smooth, the leading end portion of the unused portion of the wire, which may possibly be subject to some defect such as bending, is cut, and the resultant wire piece is blown off by means of compressed air. The blown-off wire piece may, however, cause various awkward situations. Namely, the wire extension cannot be effected if the wire piece blocks up the wire passage of the lower wire guide, for example. In some cases, moreover, the wire piece may cause a short circuit between the workpiece and the wire, thereby preventing the electric discharge machining.

## Disclosure of the Invention

The object of the present invention is to provide a wire piece recovery apparatus for a wire-cut electric discharge machine, in which a wire piece produced when a wire is cut prior to automatic wire extension is securely recovered lest the wire piece hinder the wire extension and electric discharge machining.

In order to achieve the above object, according to the present invention, there is provided a wire piece recovery apparatus for use in a wire-cut electric discharge machine having a wire extension unit which includes nozzle hole forming portions arranged to define a nozzle hole for wire extension, and a cutter for wire cutting, and which is disposed to be movable between a wire extension position and a retreated position. The wire piece recovery apparatus comprises holding means disposed on the wire extension unit so as to face the cutter and adapted to releasably hold a wire piece produced when the wire is cut by means of the cutter, a suction nozzle disposed so as to face the wire piece held by the holding means when the wire extension unit is in the retreated position and adapted to suck in the wire piece, and a recovery container communicating with the suction nozzle and adapted to receive the wire piece.

As described above, according to the present invention, when the wire extension unit is moved to the retreated position, with the wire piece releasably held by the holding means, the wire piece produced when the wire is cut by means of the cutter of the wire extension unit prior to automatic wire extension is caused to face the suction nozzle. Then, the wire piece is sucked into the suction nozzle, and is received by the recovery container communicated with the suction nozzle. This makes it possible to securely recover the wire piece produced when the wire is cut prior to the automatic wire extension. Thus, the wire piece is prevented from falling onto those components of the electric discharge machine which are disposed around a wire feed path, so that the automatic wire extension and electric discharge machining can never be hindered by the wire piece.

## Brief Description of the Drawings

Fig. 1 is a schematic fragmentary front view showing the principal part of an electric discharge machine furnished with a wire piece recovery apparatus according to one embodiment of the present invention;

Fig. 2 is a schematic perspective view, partly broken, showing the wire piece recovery apparatus and a wire extension unit; and

Fig. 3 is a schematic view for illustrating the operations of holding means of the wire piece recovery apparatus and a cutter of the wire extension unit.

Best Mode of Carrying Out the Invention

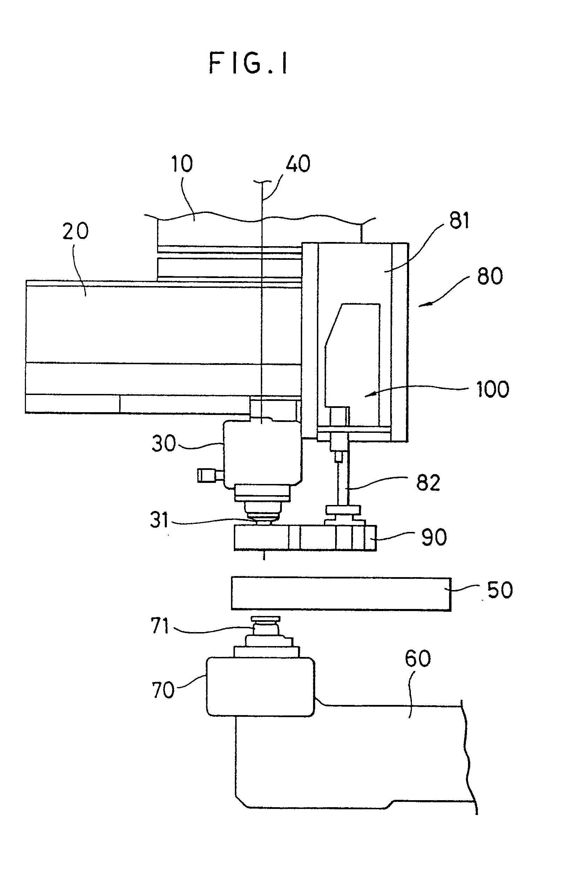

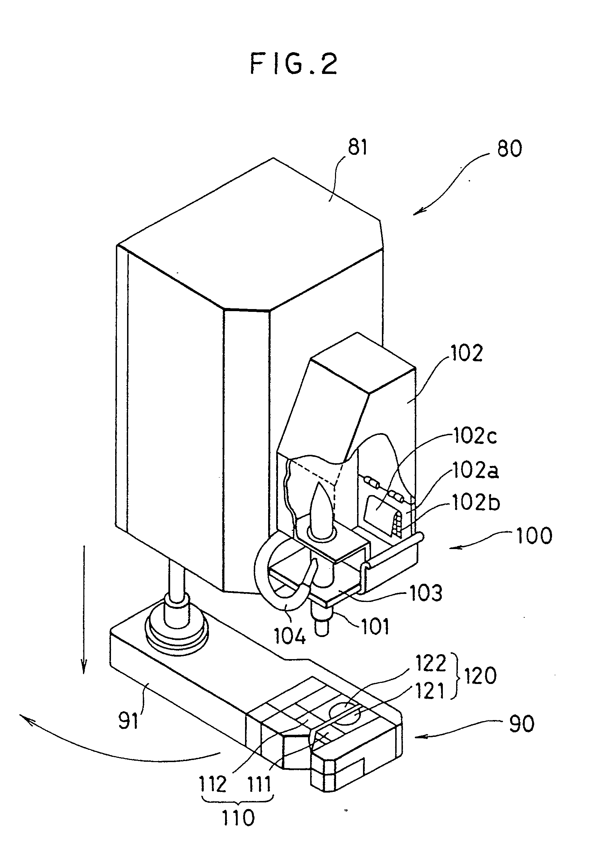

Referring to Fig. 1 and 2, a wire-cut electric discharge machine, which is furnished with a wire piece recovery apparatus of an embodiment of the present invention, is constructed basically in the same manner as an electric discharge machine disclosed in International Application No. PCT/JP86/433. More specifically, the electric discharge machine comprises a Z-axis unit 10 mounted on an upper column (not shown) for vertical motion relative to the upper column, and a UV-axis unit 20 mounted on the unit 10 for vertical motion in unison with the unit 10 and for horizontal motion relative to the unit 10. The UV-axis unit 20 is mounted with an upper wire guide 30 which is movable in unison with the unit 20. The upper wire guide 30 accommodates therein a pair of hold rollers (not shown) which are movable toward and away from each other, and are operable to deliver a wire 40 at the time of wire extension. The upper wire guide 31, which is provided at its lower portion with an upper nozzle 31, is so arranged as to cause a machining fluid, supplied through a duct (not shown) to the upper wire guide 30, to jet through the upper nozzle 31 toward the workpiece 50 fixed on a work table (not shown). The electric discharge machine further comprises a lower wire guide 70 fixed to a lower column 60 under the work table and having a lower nozzle 71, and a belt-type wire delivery unit (not shown) located on the lower-course side of the guide 70.

Further, the electric discharge machine comprises a wire extension unit 80 which includes a unit body 81 fixed to the UV-axis unit 20, and an arm assembly 90. The unit body 81 is fitted with a motor (not shown) and a first piston-cylinder assembly (not shown), and the arm assembly 90 has one end portion thereof fixed to the lower end of a rod 82 which is rotatable in unison with the rotary shaft of the motor and axially movable relatively thereto, so that the arm assembly 90 is rotated by the motor, and is vertically moved by the first piston-cylinder assembly.

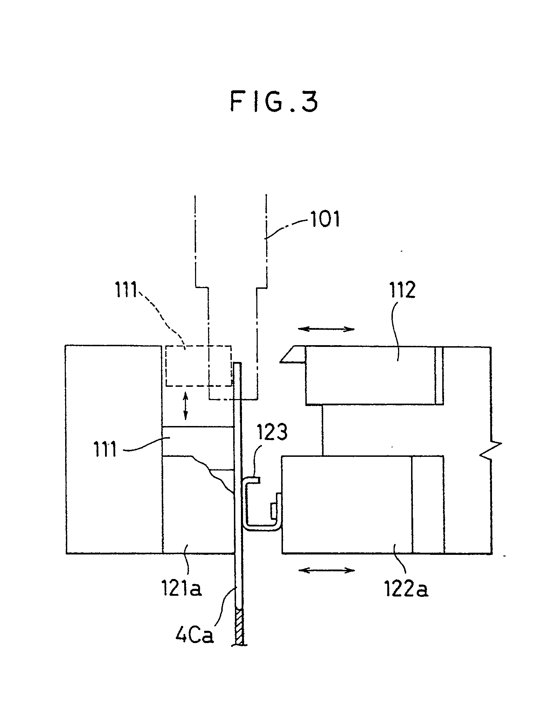

Referring to Figs. 2 and 3, the arm assembly 90 has another end portion thereof provided with a cutter 110 including first and second cutter blades 111 and 112, and a wire extension nozzle 120 which includes a stationary nozzle portion 121 and a movable nozzle portion 122 and which is located on the inner side with respect to the cutter 110 in the width direction of the arm assembly. The first cutter blade 111 is arranged to move vertically between a wire cutting position where it faces the second cutter blade 112 and a shunt position where it does not interfere with a suction nozzle (mentioned later), in unison with a piston of a second piston-cylinder assembly (not shown) fixed to an arm assembly body 91, when the the assembly is actuated. The second cutter blade 112, which is arranged to move toward and away from the first cutter blade 111 in unison with a piston of a third piston-cylinder assembly (not shown) fixed to the arm assembly body 91 when the third piston-cylinder assembly is actuated, is operable to define between itself and the first cutter blade 111 a slit for receiving the wire 40 when the second cutter blade is positioned at a location away from the first cutter blade, and is also operable to cut the wire 40 in cooperation with the first cutter blade 111 located at the wire cutting position when it is brought to a location close to the first cutter blade.

Further, the movable nozzle portion 122, which is arranged to move toward and away from the stationary nozzle portion 121, fixed to the arm assembly body 91, in unison with a piston of a fourth piston-cylinder assembly fixed to the arm assembly body 91 when the assembly is actuated, is operable to define between itself and the stationary nozzle portion 121 a slit for receiving the wire 40 when the movable nozzle portion is positioned at a distance from the stationary nozzle portion 121, and is also operable to define, in cooperation with the stationary nozzle portion, a wire extension nozzle hole into which the tip end of the upper nozzle 31 is fitted, when it is brought in contact with the stationary nozzle portion 121.

Each of the nozzle portions 121 and 122 is integrally formed with an extension portion which extends horizontally outwardly in the width direction of the arm assembly from each nozzle portion to the position right under the cutter 110. The movable nozzle extension portion 122a has an end face thereof, on the stationary nozzle extension portion side, to which a spring member 123 is fixed, and is operable to hold the wire 40 between the spring member 123 and the stationary nozzle extension portion 121a when the movable nozzle extension portion 122a is moved toward the stationary nozzle extension portion as the movable nozzle portion 122 moves toward the stationary nozzle portion 121.

The electric discharge machine further comprises an apparatus 100 for recovering a wire piece which is produced when the wire 40 is cut prior to automatic wire extension. This wire piece recovery apparatus has a suction nozzle 101 for sucking the wire piece, and a recovery container 102 for receiving the wire piece. The suction nozzle 101 is fixed to a bracket 103, fixed to the wire extension unit body 81, and extends vertically through the bracket and in parallel to the wire 40. The recovery container 102 is removably supported on the wire extension unit body 81 through the bracket 103, with the suction nozzle 101 fitted in a suction nozzle insertion hole which is formed in one half portion of the bottom face of the container, and with the other half portion of the bottom face abutted against the bracket 103. The suction nozzle 101 may be so arranged as to be removable from the wire extension unit body 81, together with the recovery container 102.

Provided on the rear wall of the recovery container 102 is a swing door 102a for the discharge of the wire piece. The door 102a is formed with an air outlet port 102b and a cover 102c concealing the same. A duct 104 having one end thereof connected to an accumulator (not shown) is connected at its another end to an intermediate portion of the suction nozzle 101, so that a negative pressure is produced inside the suction nozzle and in the vicinity of a bottom opening of the nozzle when compressed air, supplied from the accumulator to the suction nozzle 101 through the duct 104, flows into the recovery container 102 through the suction nozzle.

Although not illustrated, the electric discharge machine further comprises a numerical control device which is connected to drive sources (e.g., motor, piston-cylinder assembly, etc.) for the various operating sections of the electric discharge machine, such as the Z-axis unit, UV-axis unit 20, hold rollers, work table, wire delivery unit, wire extension unit 80, etc., and to an electric discharge machining power source unit, a machining fluid supply system, and a sensor system.

In the following, the operation of the electric discharge machine as constructed above will be explained.

At the time of electric discharge machining, electric discharge is caused between the wire 40 and the workpiece 50 while the wire 40 is being run, and machining fluid is jetted from the upper and lower nozzles 31, 71 toward the electric discharge machining region, with the arm assembly 90 retreated laterally of the wire 40.

If a wire breakage is detected during the electric discharge machining, the various operating sections of the electric discharge machine successively operate in the following manner in accordance with various control outputs from the numerical control device. First, the operations of the machining fluid supply system and the wire delivery unit are stopped, so that the supply of the machining fluid is cut off, and the transportation of the wire is stopped. Then, after the used portion of the broken wire 40 on the lower-course side is held between belts of the wire delivery unit, the wire delivery unit is driven to discard the used portion into the wire recovery box (not shown). The arm assembly 90 in its shunt position is moved downward by the first piston-cylinder assembly with the aid of the rod 82 of the wire extension unit 80, and is then rotated by the motor so that the cutter blades 111 and 112 are situated right under the upper nozzle 31, and that the leading end portion of the unused portion of the wire 40 is introduced between the cutter blades 111 and 112 through the slit.

Next, the hold rollers are driven to approach each other, thereby holding the unused portion of the wire 40 therebetween, and are then rotated to deliver the wire for a predetermined length. Further, the movable nozzle portion 122 is driven toward the stationary nozzle portion 121 by the fourth piston-cylinder assembly, so that the leading end portion of the wire 40 is held between the spring member 123 of the movable nozzle extension portion and the stationary nozzle extension portion 121a, and the second cutter blade 112 is driven toward the first cutter blade 111 in the wire cutting position by the third piston-cylinder assembly, whereby the wire 40 is cut. Then, the second cutter blade 112 is moved away from the first cutter blade 111 while keeping a wire piece 40a, produced by the wire cutting, between the spring member 123 and the stationary nozzle extension portion 121a.

Thereafter, the first cutter blade 111 is moved downward from the wire cutting position indicated by broken line in Fig. 3 to the shunt position indicated by solid line in Fig. 3, by means of the second piston-cylinder assembly. After the arm assembly 90 is rocked in the retreating direction, moreover, it is moved upward to the retreated position. In the final stage of the upward movement of the arm assembly 90, the wire piece 40a held between the spring member 123 and the stationary nozzle extension portion 121a penetrates the bottom opening of the suction nozzle 101. At this time, the first cutter blade 111 is already situated in the shunt position, so that it never interfere with the suction nozzle 101. Subsequently, compressed air is supplied from the accumulator to the suction nozzle 101. The compressed air flows into the recovery container 102 through the suction nozzle, and is discharged to the outside through the air outlet port 102b. As the compressed air is supplied in this manner, a negative pressure is produced inside the suction nozzle 101 and in the vicinity of the bottom opening thereof. Under these conditions, the movable nozzle portion 122 is moved away from the stationary nozzle portion 121, so that the spring member 123 is disengaged from the stationary nozzle extension portion 121a, whereby the wire piece 40a is released. The released wire piece 40a is sucked into the suction nozzle 101 by means of the negative pressure produced inside the suction nozzle 101 and in the vicinity of the bottom opening thereof. The wire piece 40a is passed through the suction nozzle, and is received by the recovery container 102 via a top opening of the suction nozzle.

Subsequently, the automatic wire extension is carried out. To this end, the work table is first driven, so that the center of a machining start hole associated with that electric discharge machining which is interrupted due to the wire breakage is in alignment with the axis of the wire 40. Next, the arm assembly 90 is moved downward again, and is rocked toward the upper wire guide, so as to position the wire extension nozzle 120 right under the upper nozzle 31. Then, the fourth piston-cylinder assembly is driven to cause the movable nozzle portion 122 to abut against the stationary nozzle portion 121. While keeping the wire 40 in the nozzle hole which is defined by the two nozzle portions, the arm assembly 90 is moved upward to cause the wire extension nozzle hole to be fitted on the tip end of the upper nozzle 31. Then, the hold rollers are rotated while the machining fluid is being jetted from the upper nozzle 31, so that the wire 40 is delivered toward the machining start hole and the lower wire guide 70. Restricted by the jet of the machining fluid, the wire 40 passes through the machining start hole and then a wire passage of the lower wire guide, reaches wire feed rollers via the wire delivery unit, whereupon the wire extension is finished.

Next, the supply of the machining fluid is cut off, and the rotation of the hold rollers is stopped. Thereafter, the arm assembly 90 is moved downward, so that the wire extension nozzle 120 is disengaged from the upper nozzle 31. Then, the movable nozzle portion 122 is moved away from the stationary nozzle portion 121 so as to permit the wire 40 to pass between these nozzle portions, and the arm assembly 90 is rocked in the retreating direction, and is moved upward to the retreated position.

As described above, the wire piece 40a, which is produced when the leading end portion of the wire 40 is cut prior to the automatic wire extension, can be securely taken into the recovery container 102, so that the automatic wire extension and the electric discharge machining executed thereafter cannot be hindered. In discarding the wire piece, the wire piece is discharged from the recovery container after opening the door 102a of the recovery container detached from the wire extension unit body 81.

## Claims

1. In a wire-cut electric discharge machine having a wire extension unit which includes nozzle hole forming portions arranged to define a nozzle hole for automatic wire extension, and a cutter for wire cutting, and which is movable between an automatic wire extension position and a retreated position, a wire piece recovery apparatus comprising:

holding means disposed on the wire extension unit so as to face the cutter, and adapted to releasably hold a wire piece produced when the wire is cut by means of the cutter;

a suction nozzle disposed so as to face said wire piece held by said holding means when the wire extension unit is in the retreated position, and adapted to suck in said wire piece; and

a recovery container communicating with said suction nozzle, and adapted to receive said wire piece.

2. A wire piece recovery apparatus according to claim 1, wherein said holding means includes extension portions formed integrally with said nozzle hole forming portions and extending to locations right under said cutter, respectively.

3. A wire piece recovery apparatus according to claim 2, wherein one of said extension portions is provided with a spring member on that end face thereof which faces another extension portion.

4. A wire piece recovery apparatus according to claim 1, wherein said recovery container is removably mounted on a body of the wire extension unit.

5. A wire piece recovery apparatus according to claim 1, wherein said suction nozzle has one end communicating with interior of said recovery container, and another end arranged to face said wire piece, and is operable to produce a negative pressure inside said suction nozzle and in the vicinity of said another end thereof when compressed air is supplied to an intermediate portion thereof.

# FIG. I

# FIG.2

# FIG.3

# INTERNATIONAL SEARCH REPORT

International Application No  PCT/JP90/01649

**I. CLASSIFICATION OF SUBJECT MATTER** (if several classification symbols apply, indicate all) [6]

According to International Patent Classification (IPC) or to both National Classification and IPC

Int. Cl$^5$  B23H7/10

**II. FIELDS SEARCHED**

| Minimum Documentation Searched [7] | |
|---|---|
| Classification System | Classification Symbols |
| IPC | B23H7/10 |

Documentation Searched other than Minimum Documentation
to the Extent that such Documents are Included in the Fields Searched [8]

| | |
|---|---|
| Jitsuyo Shinan Koho | 1926 — 1990 |
| Kokai Jitsuyo Shinan Koho | 1971 — 1990 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 63-62614 (Fanuc Ltd.), March 18, 1988 (18. 03. 88), & EP, A1, 286684 & US, A, 4877935 | 1-5 |
| A | JP, A, 63-120033 (Mitsubishi Electric Corp.), May 24, 1988 (24. 05. 88), (Family: none) | 1-5 |
| A | JP, A, 1-205930 (Fanuc Ltd.), August 18, 1989 (18. 08. 89), (Family: none) | 1-5 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| March 8, 1991 (08. 03. 91) | March 25, 1991 (25. 03. 91) |

| International Searching Authority | Signature of Authorized Officer |
|---|---|
| Japanese Patent Office | |

Form PCT/ISA/210 (second sheet) (January 1985)